# FASCICULE DE BREVET EUROPEEN

(11) **EP 1 456 829 B1**
(45) Date de publication et mention de la délivrance du brevet: **17.01.2007**
(21) Numéro de dépôt: 02795348.8
(22) Date de dépôt: 28.10.2002
(51) Int. Cl.: G08G 1/123, H04Q 7/22

(54) **PROCEDE ET DISPOSITIF POUR LE SUIVI EN TEMPS REEL DE LA POSITION D'UNE PERSONNE OU D'UN OBJET DURANT UN VOYAGE**
VERFAHREN UND VORICHTUNG ZUR ECHTZEITSÜBERWACHUNG DER POSITION EINER PERSON ODER EINES GEGESTANDES WÄHREND DER REISE
METHOD AND DEVICE FOR REAL-TIME TRACKING OF THE POSITION OF A TRAVELLING PERSON OR OBJECT

(30) Priorité: 18.12.2001 FR 0116410
(43) Date de publication de la demande: 15.09.2004
(73) Titulaire: FRANCE TELECOM, 75015 Paris (FR)
(72) Inventeur: BURY, Emmanuel, F-14130 Pont l'Evêque (FR); KERDRAON, Alan, Boulevard Detoile, 14000 Caen (FR); REBILLON, Jacques-Olivier, F-14000 Caen (FR); FLAMANT, Eric, F-14000 Caen (FR)
(74) Mandataire: de Roquemaurel, Bruno
(86) Numéro de dépôt international: PCT/FR2002/003692
(87) Numéro de publication internationale: WO 2003/054828

(56) Documents cités:
- DE-A- 19 949 146
- US-A- 5 570 100
- US-A- 5 924 033
- US-B1- 6 230 011

## Description

La présente invention concerne le domaine des services de télécommunication, et plus particulièrement un service de télécommunication assurant le suivi de la position d'un objet ou d'une personne durant un déplacement assuré par un moyen de transport quelconque.

Il est connu d'utiliser un réseau de radiotéléphonie mobile ou cellulaire pour localiser les personnes disposant d'un téléphone mobile. Une première méthode consiste simplement à déterminer la cellule dans laquelle se trouve le téléphone mobile. La précision offerte par une telle méthode est limitée à la taille d'une cellule du réseau cellulaire. Pour déterminer de manière plus précise la position du téléphone mobile, il est également connu d'utiliser l'amplitude ou les temps de propagation de signaux échangés entre le téléphone mobile à localiser et les stations de base avoisinantes.

Par ailleurs, certains transporteurs routiers, aériens ou ferroviaires se proposent de dédommager leurs clients en cas de retard de leur moyen de transport. Pour être dédommagé en cas de retard, les clients du transporteur doivent faire la queue à un guichet pour obtenir un formulaire de demande de remboursement, remplir le formulaire mentionnant leur heure d'arrivée à destination, et transmettre ce formulaire au transporteur. De son côté, le transporteur doit être en mesure de traiter ces formulaires et émettre des courriers pour transmettre aux voyageurs des coupons de dédommagement.
Cette solution présente donc l'inconvénient de demander une participation du client déjà mécontent du retard, et de nécessiter ensuite de la part du transporteur un traitement des formulaires reçus, ce qui entraîne une surcharge de gestion administrative, surtout si le nombre de passagers transportés est important. En outre, cette solution n'offre pas de garantie sur la réalité d'éventuels retards qui peuvent être contestés par le transporteur.

Dans le document EP 0848 360, on a proposé un système comprenant des bornes installées sur les lieux de départ et de destination de moyens de transport de voyageurs, dans le but de calculer le montant du transport à payer par les voyageurs. Dans ce système, les voyageurs doivent appeler la borne située au départ, puis celle située à l'arrivée, pour pouvoir respectivement entrer et sortir du moyen de transport. Ce document ne prévoit pas de localiser les voyageurs durant un voyage, ni de déterminer des éventuels retards.

La présente invention a pour but de supprimer ces inconvénients. Cet objectif est atteint par la prévision d'un procédé pour le suivi de la position d'une personne ou d'un objet durant un trajet, la personne ou l'objet étant équipé d'un terminal communiquant avec un serveur de suivi par l'intermédiaire d'un réseau de télécommunication.

Selon l'invention ce procédé comprend les étapes consistant à :
- enregistrer des paramètres définissant un trajet prévu entre un lieu de départ et un lieu de destination, ainsi que des dates de départ et de destination du trajet,
- détecter l'arrivée effective du terminal sur le lieu de destination prévu et mémoriser l'heure de l'arrivée effective,
- déterminer un retard en comparant l'heure d'arrivée effective et l'heure d'arrivée prévue,
- comparer le retard avec une valeur de seuil prédéfinie, et
- déclencher une action prédéterminée lorsque le retard est supérieur à la valeur prédéfinie.

Selon un mode de réalisation de l'invention, durant le trajet, il comprend au moins une étape de détermination de la position courante du terminal, et de détermination d'un retard prévu en fonction de la position du terminal par rapport au trajet prévu, et d'émission à destination du terminal, d'un message de retard contenant la valeur du retard prévu.

Selon un mode de réalisation de l'invention, ce procédé comprend en outre une étape de vérification que le terminal se trouve sur le trajet prévu durant le trajet, en comparant la position courante du terminal par rapport au trajet prévu.

Selon un mode de réalisation de l'invention, la détermination de la position courante du terminal est effectuée à l'aide d'une borne mobile communiquant avec le réseau, installée dans le moyen de transport dans lequel est transporté la personne ou l'objet muni du terminal.

Selon un mode de réalisation de l'invention, ce procédé comprend en outre, au début du trajet, une étape d'enregistrement du terminal auprès de la borne installée dans le moyen de transport, cette étape comprenant une transmission d'information d'identification entre la borne et le terminal, et l'émission à destination du serveur de suivi d'un message contenant les informations d'identification de la borne et du terminal.

Selon un mode de réalisation de l'invention, ce procédé comprend en outre, au début du trajet, une étape de vérification par le serveur de suivi que le terminal se trouve dans le moyen de transport prévu, en fonction des informations d'identification de la borne et du terminal.

Selon un mode de réalisation de l'invention, la détection de l'arrivée effective du terminal sur le lieu de destination prévu est effectuée à l'aide d'une borne fixe installée sur le lieu de destination et diffusant avec une faible portée un message d'identification de la borne à destination de terminaux situés à proximité de la borne.

Selon un mode de réalisation de l'invention, lorsqu'il reçoit un message d'identification de borne contenant une information d'identification de borne, le terminal transmet en réponse un message d'identification de terminal, un message d'arrivée contenant l'information d'identification de borne et une information d'identification de terminal étant transmise au serveur de suivi qui mémorise l'heure de réception du message en tant qu'heure d'arrivée et détermine le retard.

Selon un mode de réalisation de l'invention, ce procédé comprend une étape de détection de l'arrivée du terminal sur le lieu de départ prévu à l'aide d'une borne fixe installée sur le lieu de départ et diffusant avec une faible portée un message d'identification de la borne à destination de terminaux situés à proximité de la borne, et une étape de transmission au serveur de suivi du message d'identification émis par la borne associé au numéro d'identification du terminal, le serveur de suivi déclenchant, à la réception du message d'identification, la surveillance du retard du terminal sur le trajet correspondant.

Selon un mode de réalisation de l'invention, ce procédé comprend une étape d'émission en cas de retard d'un message d'avertissement de retard à destination de terminaux de personnes préalablement spécifiées.

L'invention concerne également un système pour le suivi de la position d'une personne ou d'un objet durant un trajet pris en charge par un transporteur sur un moyen de transport, la personne ou l'objet étant équipé d'un terminal comprenant des moyens pour établir des communications avec un réseau de télécommunication.

Selon l'invention, ce système comprend un serveur de suivi comportant des moyens pour la mise en oeuvre du procédé défini ci-avant.

L'invention concerne en outre un serveur de suivi pour le suivi de la position de personnes ou d'objets durant des trajets pris en charge par au moins un transporteur sur au moins un moyen de transport.

Selon l'invention, le serveur de suivi comprend :
- des moyens d'accès à une base de données de lignes et d'horaires de services de transport fournis par le transporteur, contenant la position géographique des lieux reliés par les lignes de transport,
- des moyens pour communiquer par l'intermédiaire d'un réseau de télécommunication avec des terminaux équipant les personnes ou les objets à suivre,
- des moyens pour recevoir et mémoriser des informations de trajet à suivre par les personnes ou les objets, en association avec une information d'identification des terminaux,
- des moyens pour obtenir la position des terminaux, et
- des moyens de calcul pour déterminer la position des terminaux par rapport à un trajet prévu et mémorisé, et déterminer un retard par rapport à un horaire associé à un trajet prévu et mémorisé.

Selon un mode de réalisation de l'invention, le serveur de suivi comprend en outre des moyens pour comparer le retard avec une valeur de seuil prédéfinie, et pour déclencher une action prédéterminée lorsque le retard est supérieur à la valeur prédéfinie.

Selon un mode de réalisation de l'invention, le serveur de suivi comprend en outre des moyens pour recevoir par l'intermédiaire du réseau de télécommunication des messages comportant des informations d'identification de bornes associées respectivement à des informations d'identification de terminaux, et des moyens pour mémoriser l'heure de réception de chaque message en tant qu'heure d'arrivée à destination du terminal associé si l'information d'identification de la borne correspond dans la base de données à une borne située sur le lieu de destination du trajet prévu correspondant.

Selon un mode de réalisation de l'invention, le serveur de suivi comprend en outre des moyens pour recevoir des messages de début de trajet comportant chacun des informations d'identification d'une borne installée dans un moyen de transport et d'identification d'un terminal, et des moyens pour vérifier à la réception d'un message de début de trajet que le terminal identifié dans le message de début de trajet se trouve dans le moyen de transport correspondant au trajet prévu pour le terminal, et pour transmettre un message d'erreur à destination du terminal lorsque celui-ci ne se trouve pas dans le moyen de transport correspondant au trajet prévu.

L'invention concerne en outre une borne pour le suivi de la position de personnes ou d'objets durant des trajets pris en charge par au moins un transporteur sur au moins un moyen de transport, la borne comprenant des moyens de transmission de courte portée pour recevoir des informations d'identification de terminaux équipant les personnes ou les objets à suivre.

Selon l'invention, cette borne comprend en outre des moyens pour transmettre à un serveur de suivi des messages contenant les informations d'identification reçues des terminaux associées respectivement à une information d'identification de la borne.

Selon un mode de réalisation de l'invention, cette borne est destinée à être installée dans chaque moyen de transport et comprend une fonction de localisation géographique.

Un mode de réalisation préféré de l'invention sera décrit ci-après, à titre d'exemple non limitatif, avec référence aux dessins annexés dans lesquels :
La figure 1 représente schématiquement un système de suivi selon l'invention ;
La figure 2 illustre sous la forme d'un organigramme les différentes étapes du procédé selon l'invention.

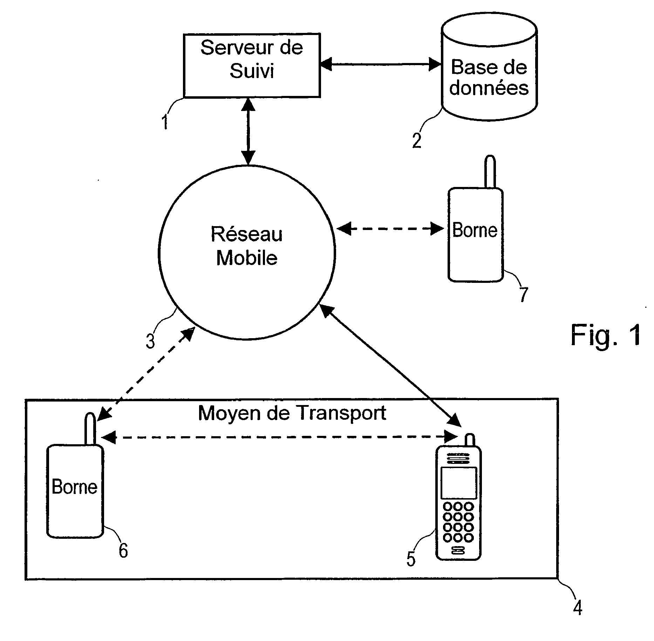

Le système de suivi représenté sur la figure 1 comprend un serveur de suivi 1 ayant accès à une base de données 2 mémorisant des informations géographiques fournissant notamment les coordonnées géographiques des lieux de départ et/ou de destination de lignes de transport assurées par un ou plusieurs transporteurs.

Le serveur de suivi 1 dispose d'un accès à un réseau de télécommunication cellulaire 3 pour pouvoir communiquer avec les terminaux 5 de voyageurs. Le réseau 3 est par exemple du type GSM, GPRS, UMTS. Dans une application du système selon l'invention au suivi de personnes, le terminal 5 peut être constitué d'un téléphone mobile. Dans une application au suivi de marchandises, le terminal 5 est constitué d'une étiquette communiquante.

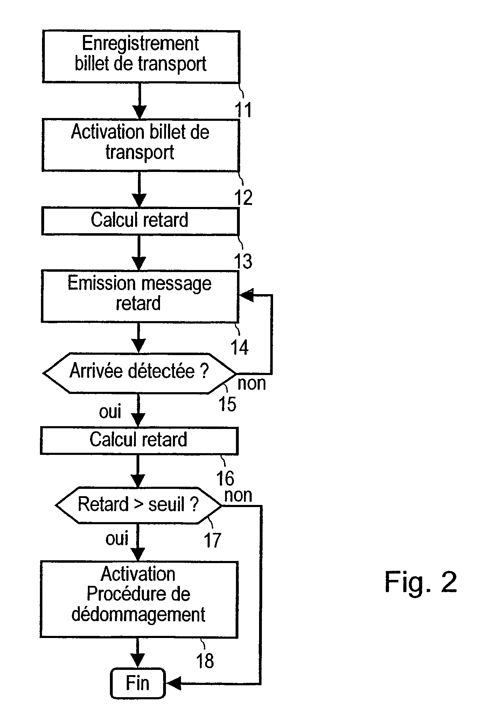

Sur la figure 2, au moment de l'achat d'un billet de transport par le voyageur, les références du voyage correspondant sont transmises au serveur de suivi 1, en association avec des données d'identification du voyageur, qui peuvent être constituées simplement par le numéro d'identification du terminal 5, par exemple le numéro d'appel du terminal.

Les références du voyage transmises au serveur de suivi 1 comprennent notamment le ou les numéros des moyens de transport utilisés, et éventuellement les noms des lieux de départ et de destination, et si nécessaire des lieux de changement de moyen de transport, ainsi que les horaires prévus de départ et d'arrivée.

Alternativement, la base de données 2 comprend toutes les informations d'horaire du ou des transporteurs concernés. Elle permet donc d'établir le lien entre d'une part une date de départ et un numéro de moyen de transport, et d'autre part les lieux et heures de départ et de destination.

Lorsque le serveur de suivi 1 reçoit les informations relatives à un billet de voyage acheté par un voyageur, il mémorise 11 ces informations, par exemple dans la base de données 2 et transmet en réponse au terminal 5 du voyageur les informations relatives au voyage (lieux de départ et de destination et horaires), par exemple sous la forme d'un message court, SMS (Short Message Service) notamment dans le cas où le réseau 3 est un réseau cellulaire de type GSM. Les informations transmises sont ensuite affichées à l'écran du terminal, soit à la réception du message, soit sur demande du voyageur qui a préalablement été informé de la réception du message.

Le terminal 5 est muni d'un programme permettant durant un voyage de déterminer sa position en faisant appel à une fonction prévue à cet effet, fournie par le réseau 3, et de transmettre la position ainsi déterminée au serveur de suivi 1. La détermination de position peut être effectuée à partir de la position de la cellule dans laquelle se trouve le terminal, ou bien par triangulation en fonction des amplitudes respectives ou des temps de propagation respectifs des signaux transmis par les stations de base du réseau cellulaire 3, voisines du terminal.
Le programme installé dans le terminal est activé manuellement par le voyageur au début du voyage. Il peut également être déclenché automatiquement à l'heure prévue de départ à partir des informations transmises dans le message émis par le serveur de suivi lors de l'achat du billet de transport.

La détermination de position par le terminal 5 durant le voyage peut être déclenchée de manière automatique périodiquement, notamment dans le cas d'une étiquette communiquante, ou manuellement par le voyageur.

La transmission de position au serveur de suivi 1 peut également être effectuée sous la forme d'un message court dans lequel figure également le numéro d'identification du terminal 5.

A la réception d'un tel message de position, le serveur de suivi 1 détermine la position du voyageur par rapport au trajet prévu et compare la localisation réelle du voyageur à celle qu'il devrait avoir si le moyen de transport respectait son horaire. Il peut donc en outre vérifier que le moyen de transport emprunté par le voyageur se rend bien au point de destination prévu en vérifiant que la position du terminal se trouve sur le trajet entre les lieux de départ et de destination prévus.

Le serveur de suivi 1 détermine 13 le retard éventuel en calculant la différence entre la durée théorique et la durée réelle du voyage. Si ce retard est supérieur à un seuil prédéfini, il en informe le voyageur, par exemple en lui transmettant 14 un message court contenant le retard prévu, ce message étant ensuite affiché sur l'écran du terminal.

Alternativement, le terminal 5 peut être muni d'une fonction de calcul de retard conçue pour mémoriser les informations de localisation des points de départ et de destination et des horaires du voyage, qui ont été transmis lors de l'achat du billet de transport, pour déterminer 13 la position géographique du terminal par rapport au trajet prévu, ainsi que le retard par rapport à l'horaire prévu, cette information étant affichée sur l'écran du terminal.
Dans ce cas, le serveur de suivi 1 n'est utilisé que pour fournir les coordonnées géographiques des points de départ et de destination et les horaires du trajet.

Selon une autre variante de l'invention, toutes les fonctions de suivi sont assurées par le serveur de suivi 1 qui interroge le réseau 3 pour lui demander la position du terminal 5 à partir du numéro d'appel de ce dernier, périodiquement ou sur demande du voyageur.

L'arrivée à destination du moyen de transport peut être déterminée 15 par le terminal 5 ou le serveur de suivi 1, en comparant la position du terminal et celle du point d'arrivée.
Pour éviter les risques de contestation par le voyageur, l'arrivée à destination peut également être déclarée par le transporteur qui émet à cet effet un message à destination du serveur de suivi 1 contenant des informations d'identification du moyen de transport. A la réception d'un tel message, le serveur de suivi 1 mémorise l'heure de réception du message et détermine 16 le retard éventuel.

Alternativement, le terminal 5 est équipé d'un émetteur/récepteur à courte portée, par exemple selon la norme "Bluetooth", les lieux de destination étant équipés de bornes fixes 7 munies chacune d'un tel émetteur/récepteur pour diffuser périodiquement des messages à destination d'éventuels terminaux de voyageurs qui passeraient à proximité. Les terminaux 5 sont alors programmés pour, à la réception d'un tel message, émettre un message à destination du serveur de suivi 1 contenant par exemple un code d'identification reçu de la borne. A l'aide de ce code d'identification, le serveur de suivi peut identifier la borne dans la base de données 2 et ainsi déterminer 15 si le voyageur se trouve ou non au point de destination prévu.

En variante, les bornes fixes 7 sont équipées de moyens pour communiquer avec le serveur de suivi 1. Dans ce cas, le terminal 5 du voyageur qui reçoit le message d'une borne fixe 7, répond à celle-ci en lui donnant son numéro d'identification. A la réception d'un tel message de réponse, la borne 7 transmet au serveur de suivi 1 le numéro d'identification du terminal reçu pour lui signaler que le voyageur est arrivé à destination.

Dans le cas où le retard du moyen de transport est supérieur à une durée prédéfinie (étape 17), le serveur de suivi 1 déclenche 18 une procédure de dédommagement. Pour cela, il envoie un message à destination du terminal 5 du voyageur pour l'informer qu'il peut être dédommagé pour le retard en lui demandant de lui indiquer sous quelle forme il souhaite être dédommagé (virement sur un compte bancaire, avoir à valoir sur le prix d'un prochain voyage, ...).

Les bornes fixes 7 installées sur les lieux de destination et donc de départ peuvent également être utilisées pour déclarer les voyageurs empruntant un moyen de transport. Lorsque le terminal 5 d'un voyageur reçoit un message d'identification de borne fixe 7, il lui transmet en réponse son numéro d'identification. A la réception d'un numéro d'identification de terminal, la borne 7 transmet au serveur de suivi 1 le numéro d'identification reçu, ainsi que le numéro d'identification de la borne. A la réception d'un tel message, le serveur de suivi identifie à l'aide des informations de billets de voyage vendus, contenues dans la base de données 2, le trajet que va effectuer le voyageur et active 12 le voyage correspondant. L'activation d'un voyage déclenche sur le serveur de suivi une tâche de surveillance du retard. On peut prévoir que cette tâche déclenche l'émission d'un message à destination du terminal 5 du voyageur lui indiquant que son trajet est sous surveillance.

Il est à noter que, dans le cas du suivi de marchandises notamment, il n'est pas nécessaire de calculer la position du terminal pendant le voyage. Dans ce cas, il est simplement nécessaire à l'arrivée de vérifier que la marchandise se trouve bien au point de destination prévu et de calculer le retard, en comparant l'heure d'arrivée avec l'heure prévue.

Selon une variante plus élaborée, le système selon l'invention comprend au moins une borne mobile 6 installée dans chaque moyen de transport, munie de moyens de communication avec les terminaux 5 des voyageurs situés dans le moyen de transport, par exemple une liaison de type "Bluetooth".

La borne mobile 6 émet périodiquement des messages contenant le numéro d'identification du moyen de transport.
Par ailleurs, le terminal 5 est programmé pour, à la réception d'un tel message, émettre un message à destination du serveur de suivi 1 contenant le numéro d'identification du moyen de transport. De cette manière, le serveur de suivi 1 peut établir la relation entre un voyageur (et son billet) et un trajet. En réponse, le serveur de suivi 1 transmet au terminal 5 du voyageur un message lui indiquant que son billet a été "activé" et l'heure d'arrivée. En outre, il peut vérifier que le voyageur est monté dans le moyen de transport correspondant au billet, et si tel n'est pas le cas, l'avertir qu'il s'est trompé de moyen de transport.

Selon une variante encore plus élaborée, chaque borne mobile 6 installée dans les moyens de transport comprend des moyens pour communiquer directement avec le serveur de suivi 1, par exemple par l'intermédiaire du réseau 3, et la fonction de localisation du voyageur est effectuée par rapport à la position de la borne 6, soit par la borne elle-même, soit par le serveur de suivi 1, qui interroge le réseau 3 pour obtenir la position de chaque borne 6.

Les voyageurs peuvent ensuite être tenus informés en temps réel de l'avancement du voyage soit par l'intermédiaire du serveur de suivi 1 qui peut être appelé par les voyageurs ou émettre périodiquement des messages de suivi à ceux-ci, soit directement par la borne mobile 6 qui émet cette information dans les messages qu'elle diffuse périodiquement à tous les terminaux de voyageurs situés à proximité et équipés de la fonction de suivi.

La borne mobile 6 installée dans chaque moyen de transport peut également être utilisée pour déterminer que le moyen de transport est arrivé à destination, soit manuellement par une commande appliquée par un opérateur sur la borne, soit automatiquement lorsqu'elle reçoit un message d'une borne fixe 7 installée sur le lieu de destination. Lorsque la borne 6 détermine que le moyen de transport est arrivé à destination, elle émet un message d'arrivée au serveur de suivi 1 qui détermine alors le retard par rapport à l'horaire prévu. Si ce retard est supérieur à un seuil prédéfini, le serveur de suivi déclenche la procédure de dédommagement décrite ci-avant en informant tous les voyageurs dont le billet correspondant au voyage a été activé.

Grâce à ces dispositions, le voyageur n'a plus à effectuer de démarche pour bénéficier du remboursement de son billet en cas de retard. Par ailleurs, le transporteur améliore la qualité du service perçue par les voyageurs, dans la mesure où il s'engage à indemniser les voyageurs automatiquement en cas de retard. Il réduit également d'une manière importante ses frais de gestion et de fonctionnement dans la mesure où la procédure de dédommagement est automatique.

Le service de suivi peut être couplé à un service d'annuaire personnel, dans lequel le serveur de suivi 1 dispose d'un accès à un annuaire personnel de chaque voyageur enregistré. Chaque voyageur a la possibilité de spécifier une liste de personnes de son annuaire à prévenir en cas de retard. Lorsque le serveur de suivi détermine que le voyageur arrivera en retard à destination, il déclenche une procédure d'envoi automatique de l'information de retard aux personnes indiquées par le voyageur.

Le service de suivi peut être aussi couplé à un service d'agenda que le voyageur tient à jour. En cas de retard, le serveur de suivi déclenche une procédure de mise à jour de l'agenda du voyageur en fonction du retard prévu et envoie une information de retard aux personnes concernées par les rendez-vous de l'agenda du voyageur, dont les horaires ont été mis à jour.

## Revendications

1. Procédé pour le suivi de la position d'une personne ou d'un objet durant un trajet, la personne ou l'objet étant équipé d'un terminal (5) communiquant avec un serveur de suivi (1) par l'intermédiaire d'un réseau de télécommunication (3),
**caractérisé en ce qu'**il comprend les étapes consistant à :
- enregistrer (11) des paramètres définissant un trajet prévu entre un lieu de départ et un lieu de destination, ainsi que des dates de départ et de destination du trajet,
- détecter l'arrivée effective du terminal (5) sur le lieu de destination prévu et mémoriser l'heure de l'arrivée effective,
- déterminer (16) un retard en comparant l'heure d'arrivée effective et l'heure d'arrivée prévue,
- comparer (17) le retard avec une valeur de seuil prédéfinie, et
- déclencher (18) une action prédéterminée lorsque le retard est supérieur à la valeur prédéfinie.

2. Procédé selon la revendication 1,
**caractérisé en ce que** durant le trajet, il comprend au moins une étape de détermination de la position courante du terminal (5), et de détermination (13) d'un retard prévu en fonction de la position du terminal par rapport au trajet prévu, et d'émission (14) à destination du terminal, d'un message de retard contenant la valeur du retard prévu.

3. Procédé selon la revendication 2,
**caractérisé en ce qu'**il comprend en outre une étape de vérification que le terminal (5) se trouve sur le trajet prévu durant le trajet, en comparant la position courante du terminal par rapport au trajet prévu.

4. Procédé selon la revendication 2 ou 3,
**caractérisé en ce que** la détermination de la position courante du terminal (5) est effectuée à l'aide d'une borne mobile (6) communiquant avec le réseau (3), installée dans le moyen de transport (4) dans lequel est transporté la personne ou l'objet muni du terminal.

5. Procédé selon la revendication 4,
**caractérisé en ce qu'**il comprend en outre, au début du trajet, une étape d'enregistrement (12) du terminal (5) auprès de la borne (6) installée dans le moyen de transport (4), cette étape comprenant une transmission d'information d'identification entre la borne et le terminal, et l'émission à destination du serveur de suivi d'un message contenant les informations d'identification de la borne et du terminal.

6. Procédé selon la revendication 5,
**caractérisé en ce qu'**il comprend en outre, au début du trajet, une étape de vérification par le serveur de suivi (1) que le terminal (5) se trouve dans le moyen de transport (4) prévu, en fonction des informations d'identification de la borne (6) et du terminal.

7. Procédé selon l'une des revendications 1 à 6,
**caractérisé en ce que** la détection de l'arrivée effective du terminal (5) sur le lieu de destination prévu est effectuée à l'aide d'une borne fixe (7) installée sur le lieu de destination et diffusant avec une faible portée un message d'identification de la borne à destination de terminaux situés à proximité de la borne.

8. Procédé selon la revendication 7,
**caractérisé en ce que** lorsqu'il reçoit un message d'identification de borne (7) contenant une information d'identification de borne, le terminal (5) transmet en réponse un message d'identification de terminal, un message d'arrivée contenant l'information d'identification de borne et une information d'identification de terminal étant transmise au serveur de suivi (1) qui mémorise l'heure de réception du message en tant qu'heure d'arrivée et détermine (16) le retard.

9. Procédé selon l'une des revendications 1 à 8,
**caractérisé en ce qu'**il comprend une étape de détection de l'arrivée du terminal (5) sur le lieu de départ prévu à l'aide d'une borne fixe (7) installée sur le lieu de départ et diffusant avec une faible portée un message d'identification de la borne à destination de terminaux situés à proximité de la borne, et une étape de transmission au serveur de suivi (1) du message d'identification émis par la borne associé au numéro d'identification du terminal, le serveur de suivi déclenchant, à la réception du message d'identification, la surveillance du retard du terminal sur le trajet correspondant.

10. Procédé selon l'une des revendications 1 à 9,
**caractérisé en ce qu'**en cas de retard, il comprend une étape d'émission d'un message d'avertissement de retard à destination de terminaux (5) de personnes préalablement spécifiées.

11. Système pour le suivi de la position d'une personne ou d'un objet durant un trajet pris en charge par un transporteur sur un moyen de transport (4), la personne ou l'objet étant équipé d'un terminal (5) comprenant des moyens pour établir des communications avec un réseau de télécommunication (3),
**caractérisé en ce qu'**il comprend un serveur de suivi (1) comportant des moyens pour la mise en oeuvre du procédé selon l'une des revendications 1 à 10.

12. Serveur de suivi (1) pour le suivi de la position de personnes ou d'objets durant des trajets pris en charge par au moins un transporteur sur au moins un moyen de transport (4),
**caractérisé en ce qu'**il comprend :
- des moyens d'accès à une base de données (2) de lignes et d'horaires de services de transport fournis par le transporteur, contenant la position géographique des lieux reliés par les lignes de transport,
- des moyens pour communiquer par l'intermédiaire d'un réseau de télécommunication (3) avec des terminaux (5) équipant les personnes ou les objets à suivre,
- des moyens pour recevoir et mémoriser des informations de trajet à suivre par les personnes ou les objets, en association avec une information d'identification des terminaux,
- des moyens pour obtenir la position des terminaux, et
- des moyens de calcul pour déterminer la position des terminaux par rapport à un trajet prévu et mémorisé, et déterminer un retard par rapport à un horaire associé à un trajet prévu et mémorisé.

13. Serveur de suivi selon la revendication 12,
**caractérisé en ce qu'**il comprend en outre des moyens pour comparer (17) le retard avec une valeur de seuil prédéfinie, et pour déclencher (18) une action prédéterminée lorsque le retard est supérieur à la valeur prédéfinie.

14. Serveur de suivi selon la revendication 12 ou 13,
**caractérisé en ce qu'**il comprend en outre des moyens pour recevoir par l'intermédiaire du réseau de télécommunication (3) des messages comportant des informations d'identification de bornes (7) associées respectivement à des informations d'identification de terminaux (5), et des moyens pour mémoriser l'heure de réception de chaque message en tant qu'heure d'arrivée à destination du terminal associé si l'information d'identification de la borne correspond dans la base de données à une borne située sur le lieu de destination du trajet prévu correspondant.

15. Serveur de suivi selon l'une des revendications 12 à 14,
**caractérisé en ce qu'**il comprend en outre des moyens pour recevoir des messages de début de trajet comportant chacun des informations d'identification d'une borne (6) installée dans un moyen de transport (4) et d'identification d'un terminal (5), et des moyens pour vérifier à la réception d'un message de début de trajet que le terminal (5) identifié dans le message de début de trajet se trouve dans le moyen de transport (4) correspondant au trajet prévu pour le terminal, et pour transmettre un message d'erreur à destination du terminal lorsque celui-ci ne se trouve pas dans le moyen de transport correspondant au trajet prévu.

16. Borne (6, 7) pour le suivi de la position de personnes ou d'objets durant des trajets pris en charge par au moins un transporteur sur au moins un moyen de transport (4), la borne comprenant des moyens de transmission de courte portée pour recevoir des informations d'identification de terminaux (5) équipant les personnes ou les objets à suivre,
**caractérisée en ce qu'**elle comprend en outre des moyens pour transmettre à un serveur de suivi (1) des messages contenant les informations d'identification reçues des terminaux (5) associées respectivement à une information d'identification de la borne.

17. Borne (6) selon la revendication 16,
**caractérisée en ce qu'**elle est destinée à être installée dans chaque moyen de transport (4) et comprend une fonction de localisation géographique.

## Claims

1. Method for tracking the position of a person or object during a journey, the person or object being equipped with a terminal (5) communicating with a tracking server (1) via a telecommunication network (3),
**characterized in that** it comprises the steps consisting of:
- recording (11) parameters defining a projected journey between a starting location and a destination location, as well as departure and arrival dates of the journey,
- detecting the effective arrival of the terminal (5) at the projected destination location and storing the effective arrival time in memory,
- determining (16) a delay by comparing the effective arrival time and the projected arrival time,
- comparing (17) the delay with a predefined threshold value, and
- initiating (18) a predetermined action when the delay is greater than the predefined value.

2. Method according to Claim 1,
**characterized in that** during the journey, it includes at least a stage of determining the current position of the terminal (5), and of determining (13) a projected delay according to the position of the terminal in relation to the projected journey, and of transmitting (14) a delay message containing the value of the projected delay to the terminal.

3. Method according to Claim 2,
**characterized in that** it further includes a stage of verifying that the terminal (5) is located on the projected journey during the journey, by comparing the current position of the terminal in relation to the projected journey.

4. Method according to Claim 2 or 3,
**characterized in that** determining the current position of the terminal (5) is performed with the aid of a mobile station (6) communicating with the network (3) installed in the means of transport (4) in which the person or object equipped with the terminal is transported.

5. Method according to Claim 4,
**characterized in that** it further includes, at the start of the journey, a stage of recording (12) the terminal (5) at the station (6) installed in the means of transport (4), this stage including a transmission of identification information between the station and the terminal, and the transmission to the tracking server of a message containing the station's and the terminal's identification information.

6. Method according to Claim 5,
**characterized in that** it further includes, at the start of the journey, a stage of verification by the tracking server (1) that the terminal (5) is located in the projected means of transport (4), according to the station's (6) and the terminal's identification information.

7. Method according to one of Claims 1 to 6,
**characterized in that** detecting the effective arrival of the terminal (5) at the projected destination location is carried out with the aid of a fixed station (7) installed at the destination location broadcasting with a short range a message identifying the station to terminals situated near to the station.

8. Method according to Claim 7,
**characterized in that** when it receives a station (7) identification message containing station identification information, the terminal (5) in reply transmits a terminal identification message, an arrival message containing the station identification information and terminal identification information being transmitted to the tracking server (1) which stores in memory the time of receiving the message as the arrival time and determines (16) the delay.

9. Method according to one of Claims 1 to 8,
**characterized in that** it includes a stage of detecting the arrival of the terminal (5) at the projected starting location with the aid of a fixed station (7) installed at the starting location broadcasting with a short range a message identifying the station to terminals situated near to the station, and a stage of transmitting to the tracking server (1) the identification message sent by the station associated with the identification number of the terminal, the tracking server, on receiving the identification message, initiating monitoring of the terminal's delay on the corresponding journey.

10. Method according to one of Claims 1 to 9, **characterized in that** in case of delay, it includes a stage of transmitting a delay warning message to terminals (5) of previously specified persons.

11. System for tracking the position of a person or object during a journey undertaken by a carrier on a means of transport (4), the person or object being equipped with a terminal (5) including means for establishing communications with a telecommunication network (3),
**characterized in that** it includes a tracking server (1) comprising means for implementing the method according to one of Claims 1 to 10.

12. Tracking server (1) for tracking the position of persons or objects during journeys undertaken by at least one carrier on at least one means of transport (4),
**characterized in that** it comprises:
- means for accessing to a database (2) of transport service routes and timetables supplied by the carrier, containing the geographical position of the locations connected by the transport routes,
- means for communicating via a telecommunication network (3) with terminals (5) with which the persons or objects to be tracked are equipped,
- means for receiving and storing in memory information on the journey to be followed by the persons or objects in association with terminal identification information,
- means for obtaining the position of the terminals, and
- calculating means for determining the position of the terminals in relation to a projected and stored journey, and determining a delay with respect to a timetable associated with a projected and stored journey.

13. Tracking server according to Claim 12,
**characterized in that** it further includes means for comparing (17) the delay with a predefined threshold value, and for initiating (18) a predetermined action when the delay is greater than the predefined value.

14. Tracking server according to Claim 12 or 13,
**characterized in that** it further includes means for receiving via the telecommunication network (3) messages comprising station (7) identification information associated respectively with terminal (5) identification information, and means for storing in memory the time of receiving each message as the arrival at destination time of the associated terminal if the station identification information corresponds in the database to a station situated at the destination location of the corresponding projected journey.

15. Tracking server according to one of Claims 12 to 14,
**characterized in that** it further includes means for receiving start of journey messages each comprising information for identifying a station (6) installed in a means of transport (4) and for identifying a terminal (5), and means for verifying on receipt of a start of journey message that the terminal (5) identified in the start of journey message is located in the means of transport (4) corresponding to the projected journey for the terminal, and for transmitting an error message to the terminal when it is not located in the means of transport corresponding to the projected journey.

16. Station (6, 7) for tracking the position of persons or objects during journeys undertaken by at least one carrier on at least one means of transport (4), the station including means of short range transmission for receiving information identifying terminals (5) with which the persons or objects to be tracked are equipped,
**characterized in that** it further includes means for transmitting to a tracking server (1) messages containing the identification information received from the terminals (5) associated respectively with information identifying the station.

17. Station (6) according to Claim 16,
**characterized in that** it is intended to be installed in each means of transport (4) and includes a geographical location function.

## Patentansprüche

1. Verfahren zur Verfolgung der Position einer Person oder eines Objekts während einer Wegstrecke, wobei die Person oder das Objekt mit einem Endgerät (5) ausgestattet ist, das über ein Fernmeldenetz (3) mit einem Verfolgungsserver (1) in Verbindung steht, **dadurch gekennzeichnet, dass** es Schritte aufweist, die darin bestehen:
- Parameter, die eine vorgesehene Wegstrecke zwischen einem Ausgangsort und einem Zielort definieren, sowie Ausgangs- und Zieldaten der Wegstrecke einzuspeichern (11),
- die tatsächliche Ankunft des Endgeräts (5) am vorgesehenen Zielort zu erfassen und die tatsächliche Ankunftszeit zu speichern,
- eine Verspätung zu bestimmen (16), indem die tatsächliche Ankunftszeit und die vorgesehene Ankunftszeit verglichen werden,
- die Verspätung mit einem vordefinierten Schwellenwert zu vergleichen (17), und
- eine vorbestimmte Aktion auszulösen (18), wenn die Verspätung größer ist als der vordefinierte Wert.

2. Verfahren nach Anspruch 1, **dadurch gekennzeichnet, dass** es während der Wegstrecke mindestens einen Schritt der Bestimmung der laufenden Position des Endgeräts (5) und der Bestimmung (13) einer voraussichtlichen Verspätung in Abhängigkeit von der Position des Endgeräts bezüglich der vorgesehenen Wegstrecke, und des Sendens (14) einer Verspätungsmitteilung an das Endgerät aufweist, die die Größe der voraussichtlichen Verspätung enthält.

3. Verfahren nach Anspruch 2, **dadurch gekennzeichnet, dass** es außerdem einen Schritt der Überprüfung aufweist, ob das Endgerät (5) sich während der Wegstrecke auf der vorgesehenen Wegstrecke befindet, indem die laufende Position des Endgeräts mit der vorgesehenen Wegstrecke verglichen wird.

4. Verfahren nach Anspruch 2 oder 3, **dadurch gekennzeichnet, dass** die Bestimmung der laufenden Position des Endgeräts (5) mit Hilfe einer mit dem Netz (3) in Verbindung stehenden mobilen Station (6) durchgeführt wird, die in dem Verkehrsmittel (4) installiert ist, in dem die Person oder das Objekt befördert wird, die oder das mit dem Endgerät ausgestattet ist.

5. Verfahren nach Anspruch 4, **dadurch gekennzeichnet, dass** es außerdem zu Beginn der Wegstrecke einen Schritt des Registrierens (12) des Endgeräts (5) mittels der in dem Verkehrsmittel (4) installierten Station (6) aufweist, wobei dieser Schritt eine Übertragung einer Identifikationsinformation zwischen der Station und dem Endgerät und das Senden einer Mitteilung an den Verfolgungsserver aufweist, die die Identifikationsinformationen der Station und des Endgeräts enthält.

6. Verfahren nach Anspruch 5, **dadurch gekennzeichnet, dass** es außerdem zu Beginn der Wegstrecke einen Schritt der Überprüfung durch den Verfolgungsserver
(1) aufweist, ob das Endgerät (5) sich im vorgesehenen Verkehrsmittel (4) befindet, abhängig von den Identifikationsinformationen der Station (6) und des Endgeräts.

7. Verfahren nach einem der Ansprüche 1 bis 6, **dadurch gekennzeichnet, dass** die Erfassung der tatsächlichen Ankunft des Endgeräts (5) am vorgesehenen Zielort mit Hilfe einer festen Station (7) erfolgt, die am Zielort installiert ist und mit einer geringen Reichweite eine Identifikationsmitteilung der Station an Endgeräte sendet, die sich in der Nähe der Station befinden.

8. Verfahren nach Anspruch 7, **dadurch gekennzeichnet, dass** das Endgerät (5), wenn es eine Identifikationsmitteilung einer Station (7) empfängt, die eine Station-Identifikationsinformation enthält, als Antwort eine Endgerät-Identifikationsmitteilung sendet, wobei eine Ankunftmitteilung, die die Station-Identifikationsinformation und eine Endgerät-Identifikationsinformation enthält, an den Verfolgungsserver (1) übertragen wird, der die Empfangszeit der Mitteilung als Ankunftszeit speichert und die Verspätung bestimmt (16).

9. Verfahren nach einem der Ansprüche 1 bis 8, **dadurch gekennzeichnet, dass** es einen Schritt der Erfassung der Ankunft des Endgeräts (5) am vorgesehenen Ausgangsort mit Hilfe einer festen Station (7), die am Ausgangsort installiert ist und mit einer geringen Reichweite eine Identifikationsmitteilung der Station an Endgeräte sendet, die sich in der Nähe der Station befinden, und einen Schritt der Übertragung der von der Station gesendeten Identifikationsmitteilung an den Verfolgungsserver (1) aufweist, die der Identifikationsnummer des Endgeräts zugeordnet ist, wobei der Verfolgungsserver bei Empfang der Identifikationsmitteilung die Überwachung der Verspätung des Endgeräts auf der entsprechenden Wegstrecke auslöst.

10. Verfahren nach einem der Ansprüche 1 bis 9, **dadurch gekennzeichnet, dass** es bei einer Verspätung einen Schritt des Sendens einer Verspätungswammeldung an Endgeräte (5) von vorher spezifizierten Personen aufweist.

11. System zur Verfolgung der Position einer Person oder eines Objekts während einer Wegstrecke, die oder das von einem Transportunternehmer auf einem Verkehrsmittel (4) mitgenommen wird, wobei die Person oder das Objekt mit einem Endgerät (5) ausgestattet ist, das Mittel aufweist, um Verbindungen mit einem Fernmeldenetz (3) aufzubauen, **dadurch gekennzeichnet, dass** es einen Verfolgungsserver (1) aufweist, der Mittel zur Anwendung des Verfahrens nach einem der Ansprüche 1 bis 10 besitzt.

12. Verfolgungsserver (1) zur Verfolgung der Position von Personen oder Objekten während Wegstrecken, die von mindestens einem Transportunternehmer auf mindestens einem Verkehrsmittel (4) mitgenommen werden, **dadurch gekennzeichnet, dass** er aufweist:
- Zugriffsmittel zu einer Datenbasis (2) von Linien und Zeitplänen von Verkehrsleistungen, die vom Transportunternehmer geliefert werden, die die geographische Position der Orte enthält, die von den Verkehrslinien verbunden werden,
- Mittel, um über ein Fernmeldenetz (3) mit Endgeräten (5) zu kommunizieren, mit denen die zu verfolgenden Personen oder Objekte ausgestattet sind,
- Mittel, um Informationen über die von den Personen oder Objekten zu verfolgende Wegstrecke zu empfangen und zu speichern, zusammen mit einer Identifikationsinformation der Endgeräte,
- Mittel, um die Position der Endgeräte zu erhalten, und
- Rechenmittel, um die Position der Endgeräte bezüglich einer vorgesehenen und gespeicherten Wegstrecke zu bestimmen, und um eine Verspätung bezüglich eines einer vorgesehenen und gespeicherten Wegstrecke zugeordneten Zeitplans zu bestimmen.

13. Verfolgungsserver nach Anspruch 12, **dadurch gekennzeichnet, dass** er außerdem Mittel aufweist, um die Verspätung mit einem vordefinierten Schwellenwert zu vergleichen (17), und um eine vorbestimmte Aktion auszulösen (18), wenn die Verspätung über dem vordefinierten Wert liegt.

14. Verfolgungsserver nach Anspruch 12 oder 13, **dadurch gekennzeichnet, dass** er außerdem Mittel, um über das Fernmeldenetz (3) Mitteilungen zu empfangen, die Identifikationsinformationen von Stationen (7) enthalten, die je Identifikationsinformationen von Endgeräten (5) zugeordnet sind, und Mittel aufweist, um die Empfangszeit jeder Mitteilung als Zielankunftszeit des zugeordneten Endgeräts zu speichern, wenn die Identifikationsinformation der Station in der Datenbasis einer Station entspricht, die sich am Zielort der entsprechenden vorgesehenen Wegstrecke befindet.

15. Verfolgungsserver nach einem der Ansprüche 12 bis 14, **dadurch gekennzeichnet, dass** er außerdem Mittel, um Wegstreckenanfangsmitteilungen zu empfangen, die je Identifikationsinformationen einer Station (6), die in einem Verkehrsmittel (4) installiert ist, und Identifikationsinformationen eines Endgeräts (5) enthalten, und Mittel aufweist, um bei Empfang einer Wegstreckenanfangsmitteilung zu überprüfen, ob das in der Wegstreckenanfangsmitteilung identifizierte Endgerät (5) sich in dem Verkehrsmittel (4) befindet, das der für das Endgerät vorgesehenen Wegstrecke entspricht, und um eine Fehlermeldung an das Endgerät zu senden, wenn dieses sich nicht in dem der vorgesehenen Wegstrecke entsprechenden Verkehrsmittel befindet.

16. Station (6, 7) für die Verfolgung der Position von Personen oder Objekten während Wegstrecken, die von mindestens einem Transportunternehmer auf mindestens einem Verkehrsmittel (4) mitgenommen werden, wobei die Station Übertragungsmittel mit geringer Reichweite aufweist, um Identifikationsinformationen von Endgeräten (5) zu empfangen, mit denen die zu verfolgenden Personen oder Objekte ausgestattet sind, **dadurch gekennzeichnet, dass** sie außerdem Mittel aufweist, um Mitteilungen zu einem Verfolgungsserver (1) zu übertragen, die die von den Endgeräten (5) empfangenen Identifikationsinformationen enthalten, die je einer Identifikationsinformation der Station zugeordnet sind.

17. Station (6) nach Anspruch 16, **dadurch gekennzeichnet, dass** sie dazu bestimmt ist, in jedem Verkehrsmittel (4) installiert zu werden, und eine Funktion der geographischen Lokalisierung aufweist.
